# EUROPEAN PATENT APPLICATION

(11) **EP 1 583 297 A1**
(43) Date of publication of application: **05.10.2005**
(21) Application number: 05006357.7
(22) Date of filing: 23.03.2005
(51) Int. Cl.: H04L 12/56

(54) **Resource management system and method**

(30) Priority: 31.03.2004 JP 2004103811
(71) Applicant: MATSUSHITA ELECTRIC INDUSTRIAL CO., LTD., Kadoma-shi, Osaka 571-8501 (JP)
(72) Inventor: Ohmoto, Masao, Kasuya-Gun Fukuoka-Ken, 811-2416 (JP); Ando, Satoshi, Munakata-Gun Fukuoka-Ken, 811-3217 (JP); Kawaguchi, Yuichi, Kasuya-Gun Fukuoka-Ken, 811-2413 (JP); Ohura, Masato, Kasuga-Shi Fukuoka-Ken, 816-0812 (JP)
(74) Representative: Balsters, Robert

(57) **Abstract**

Resource requests are continuously accepted within predetermined time by a resource management device (2) that comprises a resource request accepting unit (10), a measuring unit (11), and an allocating unit (12). The resource request accepting unit (10) accepts a resource request that is necessary for communication. The resource request includes priority of communication. The measuring unit (11) measures the accepting time when the resource request accepting unit (10) accepts resource requests. The allocating unit (12) allocates resource to the resource requests accepted in accepting time based on priority. As a result, suitable resource allocation according to the priority instead of the order of arrival is realized.

## Description

The present invention relates to communication devices operable to perform communication via a network using a necessary resource thereof, and to a resource management device, a resource management system, and a resource management method, for managing the resource.

In network environment represented by the Internet, packet communication is processed by a best effort mode. In such network environment, sufficient reservation of resources on the network is important to perform communication without interruption.

As a method for resource reservation, a protocol called RSVP (Resource Reservation Protocol) in IETF (Internet Engineering Task Force) is provided. IETF is the standard of the Internet and is disclosed in a non-patent reference 1 (RFC2205: "Resource Reservation Protocol (RSVP)-Version 1 Functional Specification"). In RSVP, a resource necessary for communication with a communication partner is reserved before the communication starts.

Reference 1 (U.S. Patent No. 5673393) discloses another resource management system.

A plurality of communication devices, connected via the network, request resource allocation to a resource management device before starting communication with other communication devices. The resource management device performs the resource allocation requested by the plurality of communication devices. At this time, the resource management device possesses resource management information for managing the resource allocation, and performs the resource allocation according to the resource management information.

In some cases, the resource management information may be lost from the resource management device due to uncertain cause.

In such cases where the resource management information is lost, when the communication devices make newly resource requests for resource allocation, a resource request even with low priority may be responded first among the resource requests. This may cause confusion in the resource management.

Especially, if decrease in network bandwidth happens concurrently with the lost of the resource management information, a problem arises that the resource management device cannot deal with a resource request that possesses high priority. This may cause a problem that delay of packets or discard of packets occur even in communication with high priority.

An object of the present invention is to provide a resource management device, a resource management system, and a resource management method that can perform resource allocation according to priority even when resource management information is lost.

A first aspect of the present invention provides a resource management device comprising: a resource request accepting unit operable to accept resource request possessing priority to request a resource; a measuring unit operable to measure accepting time for which the resource request accepting unit can accept the resource request; and an allocating unit operable to allocate the resource according to the priority for the resource request accepted by the resource request accepting unit in the accepting time.

According to the present structure, accepting of a resource request is continued for the predetermined time. When a plurality of resource requests are accepted for the predetermined time, resource allocation is executed not according to the order of arrival but according to the priority.

A second aspect of the present invention provides the resource management device as defined in the first aspect, wherein the measuring unit measures time elapse for predetermined time defined as the accepting time since the resource request accepting unit has accepted the resource request.

According to the present structure, after at least one or more resource requests are accepted, resource allocation is executed.

A third aspect of the present invention provides the resource management device as defined in the first aspect, wherein the allocating unit allocates the resource for the resource request in order of the priority.

According to the present structure, resource allocation according to the order of priority is executed. Thereby, communications are processed in the order of necessity.

A fourth aspect of the present invention provides the resource management device as defined in the first aspect, wherein the resource request accepting unit further comprises: a holding unit operable to hold the resource request temporarily.

According to the present structure, the resource management device can execute resource allocation, after accepting at least one or more resource requests.

A fifth aspect of the present invention provides the resource management device as defined in the fourth aspect, wherein, when the resource request held by the holding unit is greater in number than a predetermined number, the allocating unit allocates the resource for the resource request according to the priority.

According to the present structure, the resource management device can perform resource allocation considering the priority of the resource requests, after confirming the predetermined number of the resource requests.

A sixth aspect of the present invention provides the resource management device as defined in the first aspect, further comprising: a collecting unit operable to demand the resource request.

According to the present structure, the resource management device can reserve the resource request from a communication device independently.

A seventh aspect of the present invention provides a resource management system comprising: a plurality of communication devices, one communication device of the plurality of communication devices being operable to communicate; using a resource, with another communication device of the plurality of communication devices; and a resource management device operable to manage the resource, wherein each of the plurality of communication devices comprises: a resource request transmitting unit operable to transmit resource request possessing priority to request the resource; and a communication unit operable to communicate with a partner communication devices among the plurality of communication devices, wherein the resource management device comprises: a resource request accepting unit operable to accept the resource request transmitted by the resource request transmitting unit; and an allocating unit operable to allocate the resource for the resource request according to the priority.

According to the present structure, resource allocation is performed not according to the order of arrival of the resource request but according to the order of priority of the resource request.

An eighth aspect of the present invention provides the resource management system as defined in the seventh aspect, wherein the resource management device further comprises: a measuring unit operable to measure accepting time for which the resource request accepting unit is allowed to accept the resource request; and wherein the allocating unit allocates the resource according to the priority for the resource request accepted by the resource request accepting unit in the accepting time.

According to the present structure, accepting of the resource request is continued for the predetermined time. When a plurality of resource requests are accepted in the predetermined time, resource allocation is executed not according to the order of arrival but according to the order of priority.

A ninth aspect of the present invention provides the resource management system as defined in the seventh aspect, wherein the resource request accepting unit further comprises: a holding unit operable to hold the resource request temporarily, wherein, when the resource request held by the holding unit is greater in number than a predetermined number, the allocating unit allocates the resource for the resource request.

According to the present structure, after reserving the predetermined number of the resource requests, resource allocation is executed not according to the order of arrival but according to the order of priority.

A tenth aspect of the present invention provides the resource management system as defined in the seventh aspect, wherein said resource management device further comprises: a collecting unit operable to output notifying signal to ask the plurality of communication devices to transmit resource request; and wherein the plurality of communication devices transmit respective resource request in order of priority after receiving the notifying signal.

According to the present structure, the communication device performs resource allocation according to the priority because the resource request is outputted in the order of priority.

An eleventh aspect of the present invention provides the resource management system as defined in the tenth aspect, wherein, when no resource request is received in the resource management device after transmitting the notifying signal, the collecting unit transmits another notifying signal.

According to the present structure, the resource management device can acquire a resource request certainly.

A twelfth aspect of the present invention provides the resource management system as defined in the tenth aspect, wherein each of the plurality of communication devices further comprising: a measuring unit operable to measure waiting time defined by the priority, and wherein the resource request transmitting unit transmits the resource request after the waiting time.

According to the present structure, the communication device can output a resource request in the order of priority.

A thirteenth aspect of the present invention provides the resource management system as defined in the twelfth aspect, wherein the measuring unit starts to measure the waiting time after receiving the notifying signal.

According to the present structure, calculation of suitable waiting time is performed.

A fourteenth aspect of the present invention provides the resource management system as defined in the twelfth aspect, wherein the waiting time in a case where the communication device possesses the resource request possessing high priority is shorter than the waiting time in a case where the communication device possesses the resource request possessing low priority.

According to the present structure, the resource request is outputted from a plurality of communication devices according to the order of priority.

A fifteenth aspect of the present invention provides the resource management system as defined in the twelfth aspect, wherein, when one of the plurality of communication devices has a plurality of resource requests possessing different levels of priority, the one of the plurality of communication devices transmits the plurality of resource requests in order of the priority level.

According to the present structure, resource allocation to the resource requests is performed according to the priority.

A sixteenth aspect of the present invention provides a resource management method comprising: accepting resource request that includes priority of communication and requests a resource necessary for communication; finishing the accepting after predetermined time; and allocating, according to the priority, the resource for the resource request that is accepted in the predetermined time.

According to the present structure, accepting of the resource request is continued within the predetermined time. When a plurality of resource requests are accepted within the predetermined time, resource allocation is executed not according to the order of arrival but according to the order of priority.

A seventeenth aspect of the present invention provides the resource management method as defined in the sixteenth aspect, wherein the allocating allocates the resource for the resource request in order of the priority.

According to the present structure, resource allocation is performed not according to the order of arrival but according to the order of priority.

An eighteenth aspect of the present invention provides the resource management method as defined in the sixteenth aspect, wherein, when the resource request accepted by the accepting is greater in number than a predetermined number, the finishing finishes the accepting.

According to the present structure, the resource requests more than the predetermined number are certainly acceptable.

A nineteenth aspect of the present invention provides the resource management method as defined in the sixteenth aspect, wherein, when another resource request is accepted by the accepting after accepting a certain of resource request, the finishing finishes the accepting.

According to the present structure, resource allocation according to priority is executed on the basis of at least two resource requests.

The above, and other objects, features and advantages of the present invention will become apparent from the following description read in conjunction with the accompanying drawings, in which like reference numerals designate the same elements.
Fig. 1 is a block diagram of a resource management system in Embodiment 1 of the present invention;
Figs. 2 (a) and (b) illustrate management information in Embodiment 1 of the present invention;
Fig. 3 shows contents of a resource request in Embodiment 1 of the present invention;
Fig. 4 is an internal block diagram of a resource management device 2 in Embodiment 1 of the present invention;
Fig. 5 is a flowchart of resource allocation in Embodiment 1 of the present invention;
Fig. 6 shows contents of an accepted resource request in Embodiment 1 of the present invention;
Fig. 7 shows a priority judging table in Embodiment 1 of the present invention;
Fig. 8 shows a resource request after priority detection in Embodiment 1 of the present invention;
Fig. 9 is a block diagram of a resource management device in Embodiment 1 of the present invention;
Fig. 10 is a flowchart of resource allocation in Embodiment 1 of the present invention;
Fig. 11 is a flowchart of resource allocation in Embodiment 1 of the present invention;
Fig. 12 is a block diagram of a resource management device in Embodiment 1 of the present invention;
Fig. 13 is a block diagram of a resource management system in Embodiment 2 of the present invention;
Fig. 14 is a block diagram of a communication device in Embodiment 2 of the present invention; and
Fig. 15 shows contents of a resource request in Embodiment 2 of the present invention.

Hereinafter, embodiments of the present invention are explained, referring to the drawings.

In the present specification, several terms are defined as follows:

Resources are what are necessary for communication, including such as communication bandwidth, delay time in communication, delay fluctuation, and communication time.

A network includes communication networks such as in the Internet, wireless LAN, power-line communication, cable communication, and wireless communication.

A resource management device may be any device that manages resources; therefore, the resource management device includes a router. The resource management device also includes devices in which resource-managing software is installed.

### (Embodiment 1)

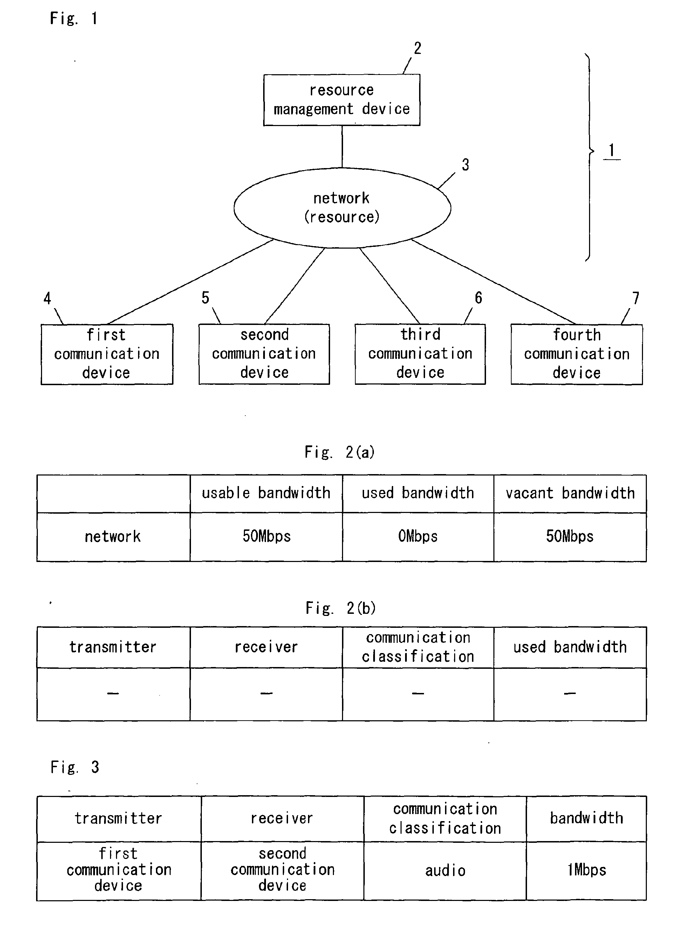

Embodiment 1 of the present invention is explained using from Fig. 1 to Fig. 12.

Fig. 1 is a block diagram of a resource management system in Embodiment 1 of the present invention. A resource management system comprises a resource management device 2 that manages resources in communication, and a plurality of communication devices that are connected to each other via a network 3. The network 3 includes resources.

The plurality of communication devices are connected to each other via the network 3 and data communication is performed among the communication devices.

Fig. 1 shows a first communication device 4, a second communication device 5, a third communication device 6, and a fourth communication device 7. The number of communication devices may be other than four. The communication device may be such a device as a computer that is connected to the network. In short, the communication device may be any device, as long as it possesses a communication function.

The first communication device 4, the second communication device 5, the third communication device 6, and the fourth communication device 7 communicate each other. The first communication device 4, the second communication device 5, the third communication device 6, and the fourth communication device 7 output resource requests to the resource management device 2. The resource management device 2 executes resource allocation according to the resource requests.

Here, the resource management device 2 possesses management information in order to manage the resource of the network 3.

Fig. 2 shows the management information in Embodiment 1 of the present invention, and the resource management device 2 possesses the management information shown in Fig. 2. As shown in Fig. 2 (a), the management information comprises usable bandwidth, used bandwidth, and vacant bandwidth of the network. The information constitutes a base for the resource allocation in the resource management device 2.

The resource management device 2 possesses information of a transmitter in communication, a receiver in communication, communication classification, and used bandwidth, as shown in Fig. 2(b). After combined with the information shown in Fig. 2 (a), the information shown in Fig. 2 (b) becomes a part of the base for the resource allocation.

The resource requests, which the communication devices output, include information shown in Fig. 3. Fig. 3 shows the contents of the resource requests in Embodiment 1 of the present invention.

As shown in Fig. 3, the resource requests include information of a transmitter, information of a receiver, communication classification, and bandwidth. The contents can be other than the described information, as long as the contents correspond to the necessary resource.

In the resource request shown in Fig. 3, the communication is between the first communication device 4 and the second communication device 5, the communication classification is audio, and the necessary bandwidth is 1 Mbps.

The communication devices output the resource request including the above-described information to the resource management device 2. The communication classification is information that shows priority, and the resource management device 2 judges the priority of the resource request based on this communication classification. Priority may be directly expressed by a degree rather than the communication classification.

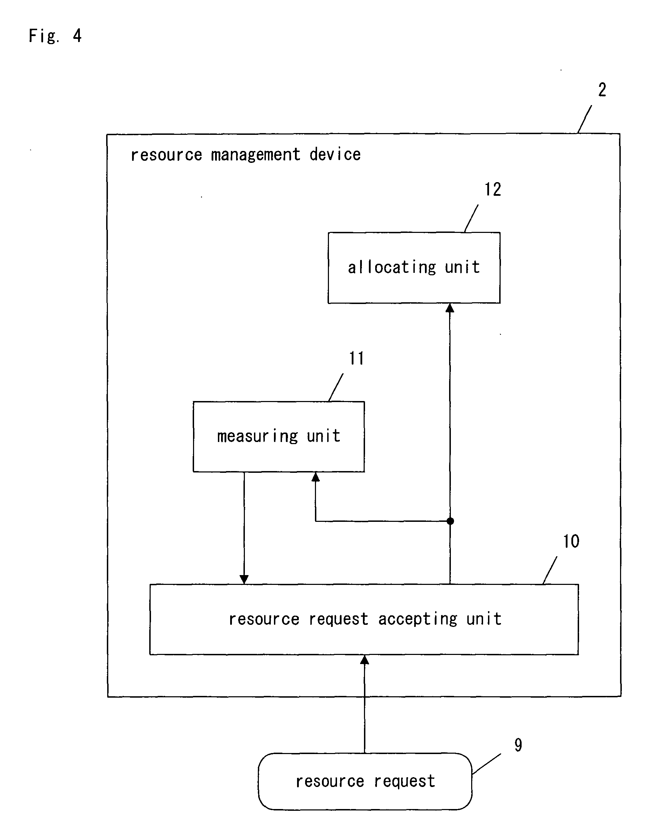

Next, the details regarding the resource management device 2 are explained using from Fig. 4 to Fig. 12.

Fig. 4 is an internal block diagram of the resource management device 2 in Embodiment 1 of the present invention. The resource management device 2 comprises the following elements:

A resource request accepting unit 10 accepts a resource request 9. A measuring unit 11 measures accepting time when the resource request accepting unit 10 accepts the resource request 9. An allocating unit 12 allocates a resource based on the priority that is included in the resource request 9. The resource allocation based on the priority is performed by this processing to the resource request 9 that is accepted within the predetermined accepting time.

The allocating unit 12 executes the resource allocation in the order of priority that is included in the resource request 9. For example, the allocating unit 12 judges the priority from the communication classification, and executes the resource allocation. When the priority itself is included in the resource request 9, the allocating unit 12 executes the resource allocation according to this priority.

While the measuring unit 11 measures the accepting time, the resource allocation to the resource request 9 is not performed, but the resource request 9 is continuously accepted. For this reason, the resource allocation is not performed in the order of arrival, which ignores the priority.

The measuring unit 11 performs time measurement from the time when one of resource request 9 as a trigger is accepted, and measures a predetermined time that is set up arbitrarily as the accepting time. A firstly received resource request is suitably used as the resource request that is used as the trigger to start the measurement.

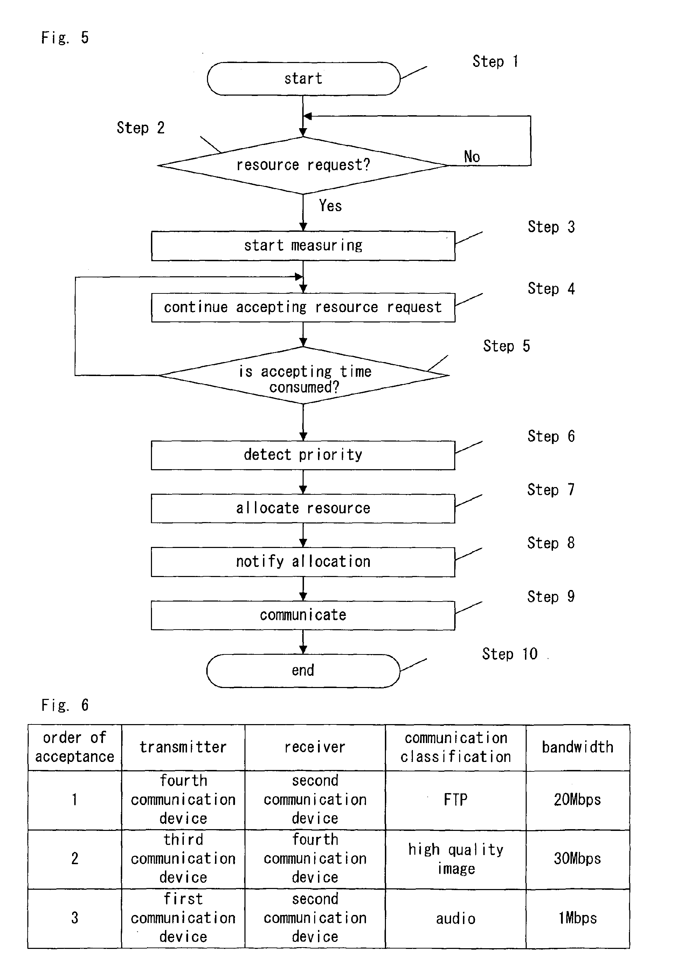

Operation of the resource management device 2 is explained using Fig. 5. Fig. 5 is a flowchart of the resource allocation processing in Embodiment 1 of the present invention.

First, the processing starts at Step 1.

Next, accepting a first resource request is detected at Step 2. When the first resource request is detected, the measuring unit 11 starts measurement of the accepting time at Step 3.

At Step 4, the resource request accepting unit 10 continues accepting the resource request during the accepting time. At Step 5, progress of the accepting time is judged. When the accepting time is judged to be consumed, the resource request accepting unit 10 completes accepting the resource request.

After the resource request accepting unit 10 completes accepting the resource request, the allocating unit 12 detects priority from the resource request at Step 6. When the priority is detected, the allocating unit 12 executes the resource allocation in the order of priority at Step 7. When the resource allocation is executed, the resource management device 2 notifies the communication device of the resource allocation at Step 8. At Step 9, the communication device communicates according to the notification of the resource allocation. Finally, the processing finishes at Step 10.

Here, the resource allocation is explained using an example.

Fig. 6 shows contents of source requests that are accepted in Embodiment 1 of the present invention.

For example, three resource requests are accepted within the accepting time as shown in Fig. 6. The first resource request is related to data transfer based on FTP (File Transfer Protocol) from the fourth communication device 7 to the second communication device 5. The second resource request is related to data transfer of a high quality image from the third communication device 6 to the fourth communication device 7. The third resource request is related to data transfer of audio from the first communication device 4 to the second communication device 5.

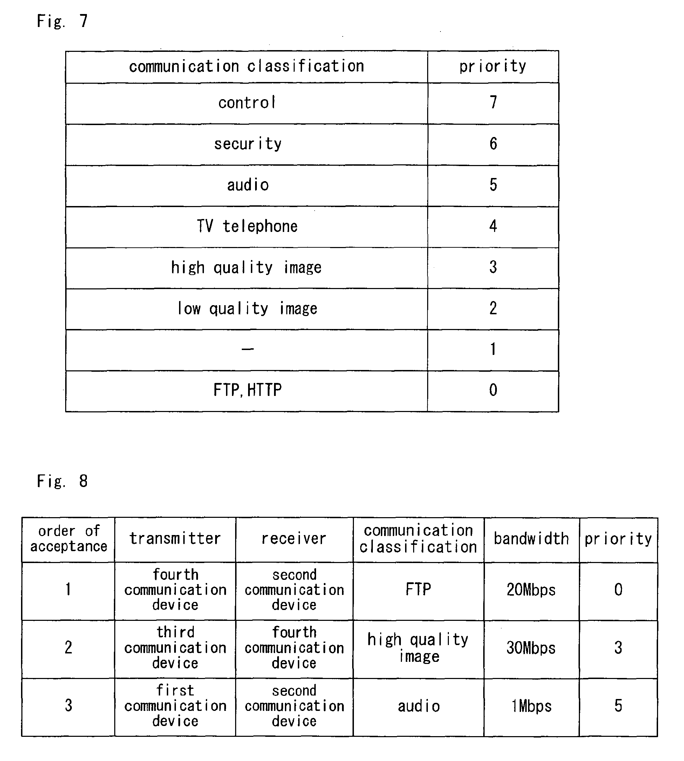

Here, the priority of the three accepted resource requests is judged according to a priority judging table shown in Fig. 7. Fig. 7 is the priority judging table in Embodiment 1 of the present invention. In Fig. 7, a number of the priority field expresses a level of the priority. The greater the number is, the higher the priority is.

In the example shown in Fig. 7, the communication related to control has the highest priority, and the subsequently lower priority is allotted in order of communication of security, audio, a visual telephone, a high quality image, a low quality image, and FTP transfer.

The priority judging table shown in Fig. 7 is just an example, and can be other than the present example.

The allocating unit 12 detects the priority to the resource requests, with cross reference to the resource request shown in Fig. 6 and the priority judging table shown in Fig. 7. As shown in Fig. 8, the priority of the third resource request for the communication from the first communication device 4 to the second communication device 5 is the highest. Then, the priority of the second resource request for the communication of the high quality image from the third communication device 6 to the fourth communication device 7 is the second highest.

Therefore, the allocating unit 12 executes the resource allocation in the order of priority. In other words, the resource allocation according to the priority, rather than in the order of accepting the resource request, can be realized.

According to the above-described processes, even when resource requests from a plurality of communication devices are accepted after the resource managing information regarding the resource allocation is lost in the resource management device 2, the resource management device 2 waits for other resource requests during the accepting time. The resource management device 2 can further perform, based on the priority, the resource allocation to a plurality of resource requests that are accepted in the accepting time. For this reason, it is possible to avoid the resource allocation in the order of arrival, or the first resource allocation to the resource request with low priority, which have been encountered in the prior art.

In the present embodiment, the priority is detected from the information of the communication classification that is included in the resource request, with cross reference to the priority judging table. The priority may be directly included in the resource request.

Next, a case where the resource request accepting unit 10 accepts the predetermined number of resource requests is explained.

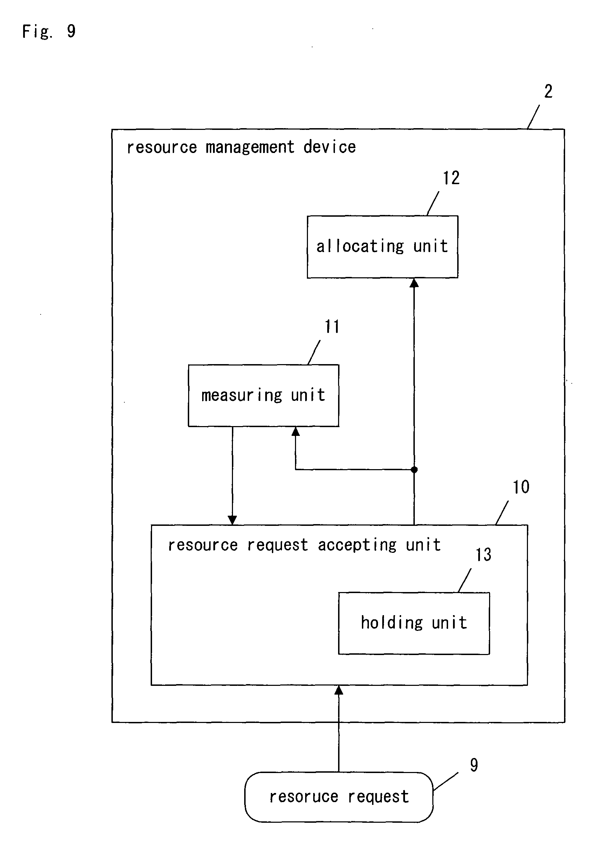

Fig. 9 is a block diagram of a resource management device in Embodiment 1 of the present invention.

The resource request accepting unit 10 comprises a holding unit 13, which holds the accepted resource request temporarily.

The allocating unit 12 performs the resource allocation, when the number of the resource requests held by the holding unit 13 becomes greater than the predetermined number.

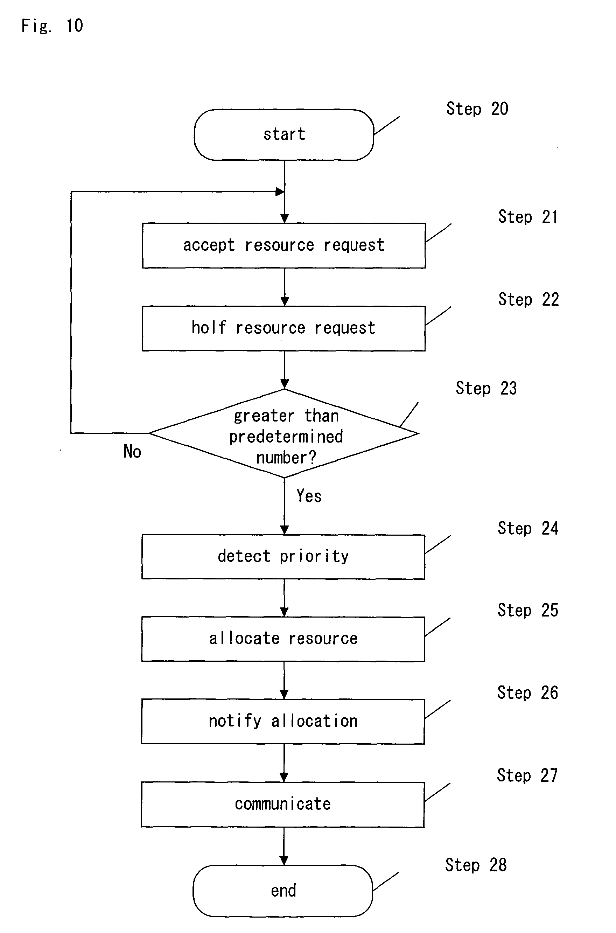

Operation of the resource management device 2 is explained using Fig. 10.

Fig. 10 is a flowchart of the resource allocation in Embodiment 1 of the present invention.

First, the processing starts at Step 20.

Next, the resource request accepting unit 10 accepts the resource request at Step 21. The holding unit 13 holds the accepted resource request at Step 22. At Step 23, whether or not the number of the resource requests held by the holding unit 23 is greater than the predetermined number is judged.

The predetermined number can be arbitrarily decided, and the number can be any number equal to or greater than one. The predetermined number may be determined based on a ratio to the number of the communication devices that are connected to the network.

When the number of the resource requests held by the holding unit 13 is greater than the predetermined number, the allocating unit 12 detects the priority of each of the resource requests included in the holding unit 13 at Step 24. For example, the priority may be detected based on the priority information included in the resource request. Or the priority may be detected from the communication classification included in the resource request and a priority allocation rule arranged correspondingly to the communication classification.

When the priority is detected, the allocating unit 12 executes the resource allocation based on the priority at Step 25. At Step 26, the resource management device 2 notifies the communication device of the result of resource allocation. At Step 27, the communication device communicates using the resource that is allocated.

As described above, the resource allocation according to the priority, not according to the order of arrival, is preferably realized by allowing the allocating unit 12 to wait for the resource allocation until the number of the resource requests becomes greater than the predetermined number.

When the predetermined time passes but the number of the resource requests does not reach the predetermined number, the allocating unit 12 may start the resource allocation after the predetermined time has passed. Waiting for the resource request using both the accepting time and the predetermined number is also preferable.

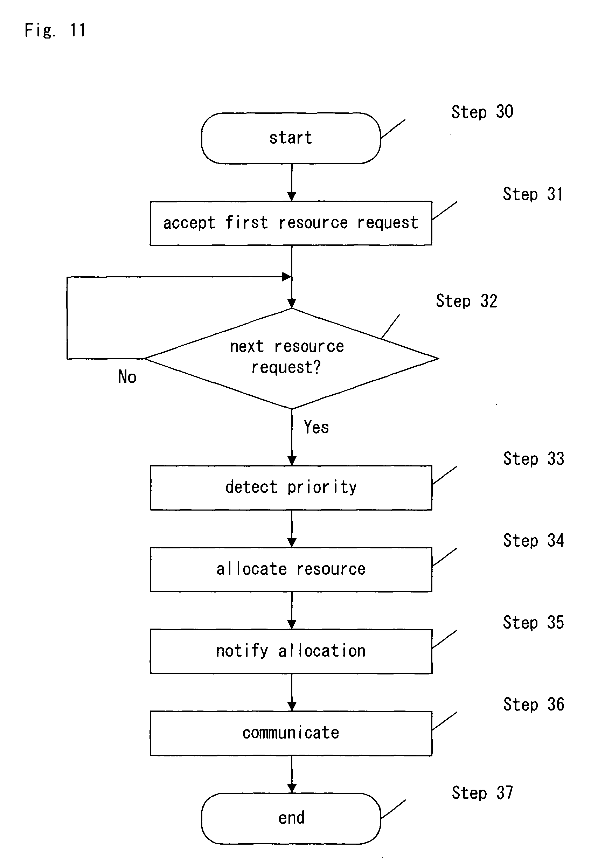

As shown in Fig. 11, the allocating unit 12 may wait for the resource allocation from the time of accepting the first resource request to the time of accepting the next resource request. Fig. 11 is a flowchart showing resource allocation in Embodiment 1 of the present invention.

The processing starts at Step 30. At Step 31, the resource request accepting unit 10 accepts the first resource request. At Step 32, acceptance of the next resource request is confirmed. When the next resource request is accepted, the allocating unit 12 starts the processing of the resource allocation.

At Step 33, the allocating unit 12 detects the priority of the resource request. At Step 34, when the priority is detected, the allocating unit 12 executes the resource allocation. Next, the allocating unit 12 notifies the communication device of the allocation result at Step 35. At Step 36, the communication device starts communication using the resource that is allocated.

According to the processing described above, the resource allocation according to the priority, not according to the order of arrival, is preferably realized.

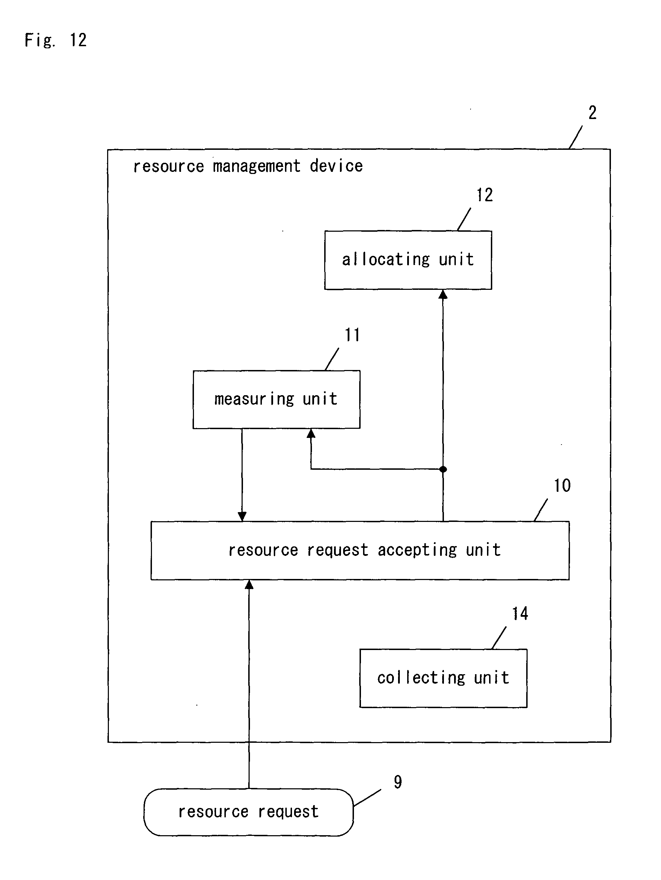

Fig. 12 is a block diagram of a resource management device in Embodiment 1 of the present invention.

As shown in Fig. 12, the resource management device 2 may further comprise a collecting unit 14, which collects the resource request from the communication device. With the aid of the collecting unit 14, the resource management device 2 may acquire, without fail, the resource request that the communication device outputs.

As mentioned above, the accepting period of the resource request is guaranteed by the accepting time and the predetermined number. Thereby, it is possible to avoid such a problem that, according to the order of arrival, resource allocation to a resource request with low priority may be performed earlier than resource allocation to a resource request with high priority.

The above-mentioned effect is not restricted to the resource management device 2, and is also enjoyed by the resource management system 1 to which the communication devices are connected.

Even in this case, the allocating unit 12 waits for the resource allocation until the accepting time is consumed or the number of the resource request amounts to the predetermined number. Thereby, the resource allocation according to the priority, not according to the order of arrival, is preferably realized.

### (Embodiment 2)

Now, Embodiment 2 is explained.

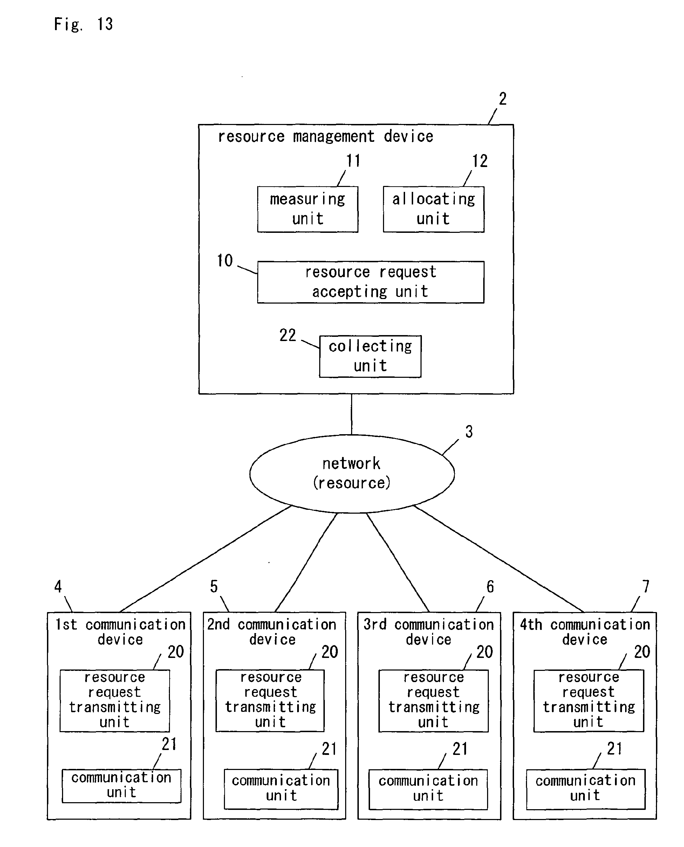

Fig. 13 is a block diagram of a resource management system in Embodiment 2 of the present invention.

The resource management device 2 is the same as that of Embodiment 1 explained above, and comprises a collecting unit 22, which outputs a notifying signal that asks transmission of the resource request to the communication device.

The first communication device 4, the second communication device 5, the third communication device 6, and the fourth communication device 7 respectively comprise a resource request transmitting unit 20 operable to output a resource request, and a communication unit 21 operable to perform communication.

The collecting unit 22 outputs a notifying signal that asks a plurality of communication devices to output the resource request. (In Fig. 13, the plurality of communication devices correspond to the first communication device 4, the second communication device 5, the third communication device 6, and the fourth communication device 7).

Each of the plurality of communication devices, upon receiving the notifying signal, outputs resource requests in the order of priority included therein. For example, when the priority of the resource request which the first communication device 4 possesses is higher than the priority of the resource request which the third communication device 6 possesses, then the first communication device 4 outputs the resource request to the resource management device 2 first. Subsequently, the third communication device 6 outputs the resource request to the resource management device 2.

When none of the communication devices transmits a resource request after the output of the notifying signal, the collecting unit 22 outputs the notifying signal once again. By this processing, the resource requests from the communication devices are received surely.

In order to make it sure to output the resource request according to priority, the collecting unit 22 may output a notifying signal with designated priority. For example, when the notifying signal is outputted to collect only a resource request with high priority, a communication device that possesses the resource request with high priority may output the resource request. When the notifying signal is outputted to collect only a resource request with medium priority, a communication device that possesses the resource request with medium priority may output the resource request. When the notifying signal is outputted to collect only a resource request with low priority, a communication device that possesses the resource request with low priority may output the resource request.

Thus, collecting the resource request by designating the priority, collection of the resource request corresponding to the priority is surely performed.

The resource management device 2, which has accepted the resource request, performs the resource allocation. Since the resource request is outputted in the order of priority in the present case, the resource allocation is also performed in the order of priority.

Next, in order for a plurality of the communication devices to output the resource request in the order of priority, processing is explained for a case where each communication device outputs a resource request after waiting time that is differently designated for each priority.

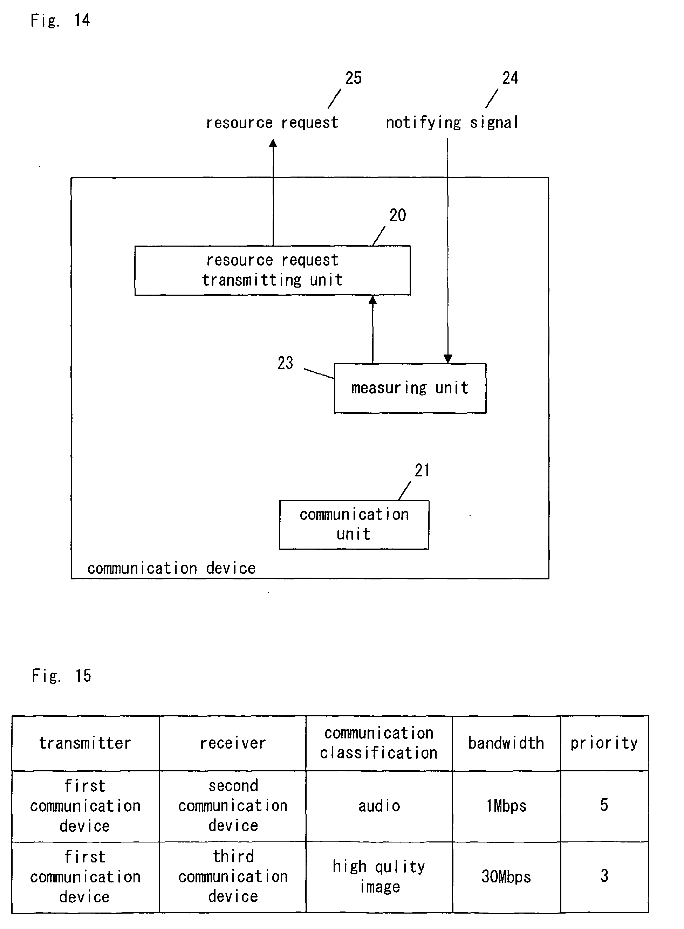

Fig. 14 is a block diagram of a communication device in Embodiment 2 of the present invention.

A measuring unit 23 measures waiting time after receiving a notifying signal 24.

The resource request transmitting unit 20 outputs a resource request 25 to the resource management device 2, after the measuring unit 23 measures the waiting time.

Here, the waiting time, which the measuring unit 23 measures, is set depending on the priority.

For example, when the priority is high, the waiting time is set short, and when the priority is low, the waiting time is set long. Since the waiting time varies depending on the levels of the priority, the resource request 25 can be outputted in the order of higher priority.

For example, suppose that the priority of a resource request that the first communication device 4 possesses is higher than the priority of a resource request that the second communication device 5 possesses. Further suppose that the waiting time in the first communication device 4 is 5 ms and the waiting time in the second communication device 5 is 10 ms. The notifying signal 24 from the collecting unit 22 is inputted into the first communication device 4 and the second communication device 5 at the same time. After receiving the notifying signal 24, the measuring unit 23 of the first communication device 4 measures the waiting time of 5 ms. On the other hand, the measuring unit 23 of the second communication device 5 measures the waiting time of 10 ms.

The first communication device 4 and the second communication device 5 output the resource request 25 after each waiting time has passed, respectively. In other words, the first communication device 4 outputs the resource request 25 at 5 ms after receiving the notifying signal 24. On the other hand, the second communication device 5 outputs the resource request 25 at 10 ms after receiving the notifying signal 24. Since the resource request is outputted in the order of priority, the resource allocation is also performed in the order of priority.

Since the communication device outputs the resource request in the order of priority, the resource allocation is performed in the order of priority even when the resource management device 2 performs the resource allocation in the order of arrival. This point is a merit of the present embodiment.

Since each communication device outputs a resource request in the order of priority, the resource management device 2 may execute the resource allocation in the order of arrival, or may alternatively perform the resource allocation according to the priority after waiting a plurality of resource requests to be accepted.

Next, a case is explained where one communication device possesses a plurality of resource requests.

Assume that the first communication device 4 possesses the resource requests regarding a plurality of communication, as shown in Fig. 15.

Fig. 15 illustrates contents of resource requests in Embodiment 2 of the present invention.

One of the resource requests is for audio communication to the second communication device 5, and the other of the resource requests is for high quality image communication to the third communication device 6. The former possesses the higher priority.

In this case, the first communication device 4 outputs the resource request for the audio communication first, and then outputs the resource request for the high quality image. In other words, the first communication device 4 outputs the resource request in the order of priority.

As illustrated above, when one communication device outputs a plurality of resource requests, the plurality of resource requests are outputted according to the order of priority that is included in each of the plurality of resource requests.

The communication device may output resource requests in the order of priority. Alternatively, the communication device may output a resource request with high priority, and then output a resource request with low priority after the resource allocation to the resource request with high priority is performed.

According to the above-described resource management system, the communication device outputs resource requests in the order of priority. Therefore, the resource management device can perform the resource allocation according to the priority.

According to the present invention, even after the management information is lost from the resource management device, the resource request from the communication device is accepted for a certain time, and the resource allocation based on the priority is performed to the accepted resource request. Therefore, suitable resource allocation according to the priority instead of the order of arrival is realized.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A resource management device (2) comprising:
a resource request accepting unit (10) operable to accept resource request possessing priority to request a resource;
a measuring unit (11) operable to measure accepting time for which said resource request accepting unit (10) can accept the resource request; and
an allocating unit (12) operable to allocate the resource according to the priority for the resource request accepted by said resource request accepting unit (10) in the accepting time.

2. The resource management device (2) as claimed in claim 1, wherein said measuring unit (11) measures time elapse for predetermined time defined as the accepting time since said resource request accepting unit (10) has accepted the resource request.

3. The resource management device (2) as claimed in claim 1, wherein said allocating unit (12) allocates the resource for the resource request in order of the priority.

4. The resource management device (2) as claimed in claim 1, wherein said resource request accepting unit (10) further comprises:
a holding unit (13) operable to hold the resource request temporarily.

5. The resource management device (2) as claimed in claim 4, wherein, when the resource request held by said holding unit (3) is greater in number than a predetermined number, said allocating unit (12) allocates the resource for the resource request according to the priority.

6. The resource management device (2) as claimed in claim 1, further comprising:
a collecting unit (14) operable to demand the resource request.

7. A resource management system (1) comprising:
a plurality of communication devices (4)-(7), one communication device of said plurality of communication devices (4)-(7) being operable to communicate, using a resource, with another communication device of said plurality of communication devices (4)-(7); and
a resource management device (2) operable to manage the resource,
wherein each of said plurality of communication devices (4)-(7) comprises:
a resource request transmitting unit (20) operable to transmit resource request possessing priority to request the resource; and
a communication unit (21) operable to communicate with a partner communication devices among said plurality of communication devices (4)-(7),
wherein said resource management device (2) comprises:
a resource request accepting unit (10) operable to accept the resource request transmitted by said resource request transmitting unit (20); and
an allocating unit (12) operable to allocate the resource for the resource request according to the priority.

8. The resource management system (1) as claimed in claim 7, wherein said resource management device (2) further comprises:
a measuring unit (11) operable to measure accepting time for which said resource request accepting unit (10) is allowed to accept the resource request, and
wherein said allocating unit (12) allocates the resource according to the priority for the resource request accepted by said resource request accepting unit (10) in the accepting time.

9. The resource management system (1) as claimed in claim7, wherein said resource request accepting unit (10) further comprises:
a holding unit (13) operable to hold the resource request temporarily,
wherein, when the resource request held by said holding unit (13) is greater in number than a predetermined number, said allocating unit (21) allocates the resource for the resource request.

10. The resource management system (1) as claimed in claim7, wherein said resource management device (2) further comprises:
a collecting unit (22) operable to output notifying signal to ask said plurality of communication devices (4)-(7) to transmit resource request, and
wherein said plurality of communication devices (4)-(7) transmit respective resource request in order of priority after receiving the notifying signal.

11. The resource management system (1) as claimed in claim 10, wherein, when no resource request is received in said resource management device (2) after transmitting the notifying signal, said collecting unit (22) transmits another notifying signal.

12. The resource management system (1) as claimed in claim 10, wherein each of said plurality of communication devices (4)-(7) further comprising:
a measuring unit (23) operable to measure waiting time defined by the priority, and
wherein said resource request transmitting unit (20) transmits the resource request after the waiting time.

13. The resource management system (1) as claimed in claim 12, wherein said measuring unit (23) starts to measure the waiting time after receiving the notifying signal.

14. The resource management system (1) as claimed 12, wherein the waiting time in a case where said communication device possesses the resource request possessing high priority is shorter than the waiting time in a case where said communication device possesses the resource request possessing low priority.

15. The resource management system (1) as claimed in claim 12, wherein, when one of said plurality of communication devices (4)-(7) has a plurality of resource requests possessing different levels of priority, the one of said plurality of communication devices (4)-(7) transmits the plurality of resource requests in order of the priority level.

16. A resource management method comprising:
accepting resource request that includes priority of communication and requests a resource necessary for communication;
finishing said accepting after predetermined time; and
allocating, according to the priority, the resource for the resource request that is accepted in the predetermined time.

17. The resource management method as claimed in claim 16, wherein said allocating allocates the resource for the resource request in order of the priority.

18. The resource management method as claimed in claim 16, wherein, when the resource request accepted by said accepting is greater in number than a predetermined number, said finishing finishes said accepting.

19. The resource management method as claimed in claim 16, wherein, when another resource request is accepted by said accepting after accepting a certain resource request, said finishing finishes said accepting.
